(19) Europäisches Patentamt
European Patent Office
Office européen des brevets

(11) **EP 1 759 232 B1**

(12) **EUROPEAN PATENT SPECIFICATION**

(45) Date of publication and mention
of the grant of the patent:
**27.02.2008 Bulletin 2008/09**

(51) Int Cl.:
*G02B 6/44* (2006.01)   *C03B 37/012* (2006.01)
*C03B 37/014* (2006.01)   *C03B 37/027* (2006.01)
*C03B 37/018* (2006.01)

(21) Application number: **05752873.9**

(22) Date of filing: **17.06.2005**

(86) International application number:
**PCT/NL2005/000442**

(87) International publication number:
**WO 2005/124417 (29.12.2005 Gazette 2005/52)**

(54) **METHOD AND INSTALLATION FOR PRODUCING A FIBERED ELEMENT WITH A LIGHT-SELECTIVE FILTER**

VERFAHREN UND INSTALLATION ZUR HERSTELLUNG EINES GEFASERTEN ELEMENTS MIT EINEM LICHTSELEKTIVEN FILTER

METHODE ET INSTALLATION POUR PRODUIRE UN ELEMENT FIBREUX DOTE D'UN FILTRE SELECTEUR DE LUMIERE

(84) Designated Contracting States:
**AT BE BG CH CY CZ DE DK EE ES FI FR GB GR HU IE IS IT LI LT LU MC NL PL PT RO SE SI SK TR**

(30) Priority: **21.06.2004 FR 0451301**

(43) Date of publication of application:
**07.03.2007 Bulletin 2007/10**

(73) Proprietor: **Draka Comteq B.V.**
**1083 HJ Amsterdam (NL)**

(72) Inventors:
• **ALADENIZE, Bernard**
 **F-78700 Conflans-Ste-Honorine (FR)**
• **ANDRE, Sébastien**
 **F-34570 Pignan (FR)**
• **ANDRIEU, Xavier**
 **F-91220 Bretigny-sur-Orge (FR)**
• **LIBERT, Jean-François**
 **F-62360 Condette (FR)**

(74) Representative: **Van kan, Johan Joseph Hubert et al**
**Algemeen Octrooibureau**
**P.O. Box 645**
**NL-5600 AP Eindhoven (NL)**

(56) References cited:
**EP-A- 1 065 546**      **US-A- 5 111 523**
**US-B1- 6 321 014**

## Description

The invention relates to the field of fibered elements of a vitreous (in other.words glass-based) material, and more particularly to installations and methods for producing such fibered elements.

Herein, with the expression "fibered element" is meant any body comprising a first part of vitreous material and having a longitudinal extension that is.far greater than its transverse extension, and the first part of the fibered element not necessarily providing a light guiding function. It can, consequently, notably, be a glass fiber or an optical fiber, regardless of its cross-section.

In certain applications, so called colored or optically-coded fibered elements are employed, meaning that they are configured so as to be visually recognizable, or recognizable by an optical sensing instrument. This is notably the case in the optical communications field, and in the textile and decoration fields.

For example, in the optical communications field, the optical fibers can be assembled into arrays (or ribbons), that are grouped together into cables. Several hundreds of optical fibers can thus be found grouped together within one single cable. In order to be able to differentiate the optical fibers thus grouped together, for example for connection or repair purposes, a frequent practice is to color them, preferably over their whole length. At least two known solutions exist to achieve this.

A first solution consists in surrounding the outer cladding of the optical fiber with a pigmented resin, for example by dipping them into a bath during a step implemented subsequent to their production (i.e. off-line). By "outer cladding" the layer or layers surrounding the vitreous cladding, which surrounds the fiber core, is meant.

This first solution makes it possible to identify an optical fiber over its whole length. Nevertheless, this does not ensure a sufficient length of life as the surface coloring is subject to abrasion and/or surface mechanical stresses. For example, when an optical fiber is part of an array, the additional coloring layer is in contact with the matrix of the array. Now, when an optical fiber is repaired, it must be disunited from the matrix which can result in suppression, at least locally, of the additional coloring layer with a consequent loss of identification. Further, this first solution introduces supplementary costs as a dedicated, supplementary coloring installation is necessary.

A second solution consists in surrounding the vitreous cladding of the optical fiber, once the operation of drawing the core-optical cladding assembly has been terminated, with a cladding that includes a colouring pigment.

This second solution also makes it possible to identify an optical fiber over its whole length. It offers a greater longevity than the first solution, but nevertheless has an inherent disadvantage resulting from the cross-linking of the pigmented resin on-line (around the core) at high speed with UV radiation. The coloring pigments have a tendency to absorb a significant proportion of UV, which substantially reduces the efficiency of cross-linking, particularly when performed at high speed. Further, incorporating coloring pigments into the resin forming the optical cladding modifies the viscosity thereof. Now, as viscosity modification is dependent on the type of pigment employed, it is necessary to adjust manufacturing parameters as a function of the pigment employed.

As no known solution is entirely satisfactory, the invention sets out to improve this situation.

The invention therefore provides a method for producing a fibered element comprising:

- forming an assembly by surrounding a first part of vitreous material, with a second part having first optical properties, then
- drawing said assembly in a longitudinal direction so as to increase its longitudinal dimension while reducing at least one of its transverse dimensions, said increase and reduction being chosen so as to transform at least certain of the said first optical properties of the second part into second optical properties allowing it to selectively filter, in a direction substantially perpendicular to the longitudinal direction of the drawn assembly, photons of which the wavelengths fall at least in a selected spectral band.

Herein, the expression "first optical properties" is intended to mean the ability to filter photons of which the wavelengths fall for example in a first wavelength band, or even the inability to filter photons regardless of their wavelength and, the expression "second optical properties" is intended to mean the ability to selectively filter photons of which the wavelengths fall within at least a second selected wavelength band. Herein, the expression "selectively filter" furthermore means reflecting or re-directing, for example by interference, or yet again, absorbing, photons having certain selected wavelengths.

The method according to the invention may include supplementary characteristics which can be implemented separately or in combination, and in particular:

- adding a coloring: the formation of the assembly can consist in surrounding the first part with a second part having an inner part prolonged by an outer part designated, once drawn, to filter the photons of which the wavelengths fall at least in the selected spectral band. In this case, the outer part is for example made from a colored material, the filtering then consisting in reflecting or emitting photons of which the wavelengths fall in the selected spectral band and/or in absorbing photons of which the wavelengths fall in the selected spectral band. For example, the first part (constituting for example a fiber core) can be made of silica and the colored material constituting the outer part of the second part (constituting, for example, the optical cladding) can be of colored silica,

- providing a chromatic filter: alternatively, the formation of the assembly can consist in surrounding the first part with a second part carrying an optical filter precursor designed (once the assembly has been drawn) to define an optical filter responsible for reflecting the photons of which the wavelength falls in the selected spectral band. In this case, the optical filter precursor can be constituted by at least one layer of a first material having a selected first refractive index n1, surrounded by a layer of a second material having a second selected refractive index n2, different from the first refractive index n1,
- the layers of the first and second materials can have, once drawn, respective thicknesses d1 and d2 that are related to each other, to the first n1 and second n2 refractive indices and the central wavelength λ of the selected spectral band, by the relation

$$\lambda = 2(n1.d1 + n2.d2).$$

- the ratio between the first n1 and second n2 refractive indices can be comprised between 1.02 and 1.5.
- the optical filter precursor can be constituted by a selected number of alternations of layers of the first material and layers of the second material. Their number is for example at least equal to 1 and at the most equal to 40.
- between the first part and the optical filter precursor, there can optionally be interposed a thick layer of a material having a refractive index comprised between n1 and n2, and it is possible to add a thick layer of a material having a refractive index comprised between n1 and n2 after the optical filter precursor,
- within the second part there can be formed, prior to drawing, an absorbing structure (preferably achromatic) designed to absorb, after drawing, photons comprised in at least one selected spectral band different from the filter band. The absorbing structure can for example be constituted of at least one layer of an organic or mineral pigment between the core and the filter,
- the first part can be prepared from a silica-based material having for example a selected refractive index profile, the first material being pure silica or doped (so as to increase its refractive index) silica, and the second material being substantially pure silica or doped (so as to reduce its refractive index) silica,
- the drawn assembly can be surrounded by a substantially transparent covering.

The fibered element obtained by the above method can be an optical fiber or a glass fiber, with or without an external covering. It can also be embedded in a polymer matrix. It can also be employed for weaving, optionally in conjunction with thread or fibers of other types.

The invention further provides an installation for producing fibered elements, comprising at least:

- first drive means adapted to rotate a first part of a fibered element made of vitreous material,
- first and second feed means adapted to supply at first and second outlets, selectively, respectively, and in an alternating fashion, first and second materials designed to constitute at least a second part and its optical filter precursor,
- first heating means adapted to set to a selected temperature region located in the neighborhood of the first and second outlets, and
- second drive means adapted to drive in linear motion the first and second feed means and the first heating means, in the neighbourhood of the first part so as to constitute an assembly comprising the first part and the second part in conformity with the method above.

Preferably, the installation comprises second heating means adapted to heat a part of at least the assembly, and third drive means adapted to drive a part of at least the assembly, by pulling its heated end, to increase the longitudinal dimension thereof while simultaneously reducing its transversal dimensions, to bring about the change in certain transverse optical properties of the second part.

The installation can preferably also comprise covering means adapted to surround the drawn assembly with a substantially transparent covering.

Further characteristics and advantages of the invention will become clear from the following detailed description, and the attached drawings, in which:

Figure 1 illustrates diagrammatically a first embodiment of a fibered element according to the invention,
Figure 2 shows diagrammatically, in cross section, a second embodiment of a fibered element according to the invention,
Figure 3 shows diagrammatically a first example of a refractive index profile in the assembly of core and optical cladding of the fibered element of Figure 2,
Figure 4 shows diagrammatically a second example of a refractive index profile in an assembly of core and optical cladding.
Figure 5 shows diagrammatically a third example of a refractive index profile in an assembly of core and optical cladding, and
Figures 6A and 6B show diagrammatically two parts of an example of an embodiment of an installation for producing a fibered element according to the invention.

The attached drawings may not only act to supplement the invention, but also to contribute to its definition if necessary.

The invention sets out to allow production of fibered elements having a coloring and/or optical coding that is durable over time.

Below, it will be considered that the fibered elements are optical fibers, for example designed for the optical communications field. Nevertheless, the invention is not limited to this type of fibered element. It indeed covers any fibered elements in vitreous material (i.e. glass-based material), such as for example certain glass fibers. Further, the invention is not limited to the optical communications field. It also concerns, and in particular, field of textile, in particular weaving, and the decoration field.

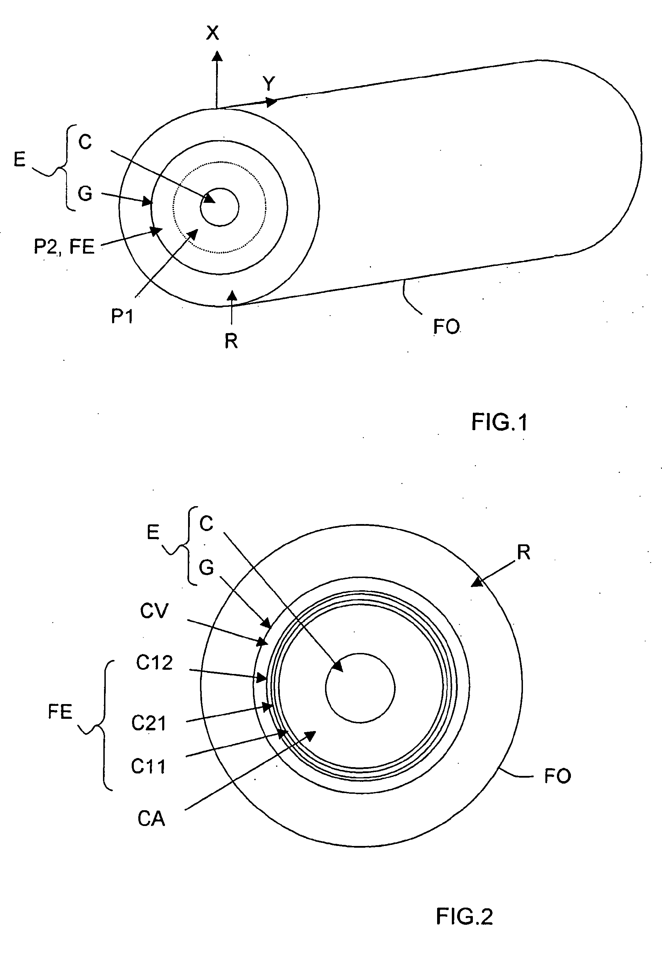

The invention provides a method dedicated to the production of fibered elements (herein, optical fibers), for example of the type illustrated in Figure 1.

The method consists firstly, starting from a first part C, here constituting a fiber core (or primary preform), in surrounding this core C with a second part, here constituting an optical cladding G, and having the first optical properties, so as to constitute an assembly E. The first optical properties are here defined by at least one optical fiber precursor designed to constitute at least one optical filter FE, once the optical fiber F0 has been produced.

The core C is for example realised by several layers of silica of different refractive indices, so as to exhibit a selected refractive index profile.

Once the assembly E has been formed, it is drawn in a longitudinal direction Y in order to increase its longitudinal dimension and reduce its transversal dimension (here its diameter on the X-axis). Increasing the longitudinal dimension and reducing its diameter are chosen so as to ensure transformation of at least certain of the first optical properties of optical cladding G and, consequently, of optical filter FE precursor, and of the second optical properties allowing it to selectively filter, in a direction substantially perpendicular to the fiber axis (Y), photons of which the wavelengths fall within at least one selected spectral band. In other words, in this first implementation of the method of the invention, the optical filter FE resulting from drawing the optical filter precursor, has optical properties allowing it to selectively filter certain photons.

Once the assembly E has been drawn, it can then be surrounded with a substantially transparent cladding R, in order to constitute an optical fiber F0.

The optical filter FE, and more precisely its precursor, can be made in different ways. A first manner is diagrammatically illustrated in Figure 1. More precisely, in this example, the optical cladding G is preferably made of two parts P1 and P2.

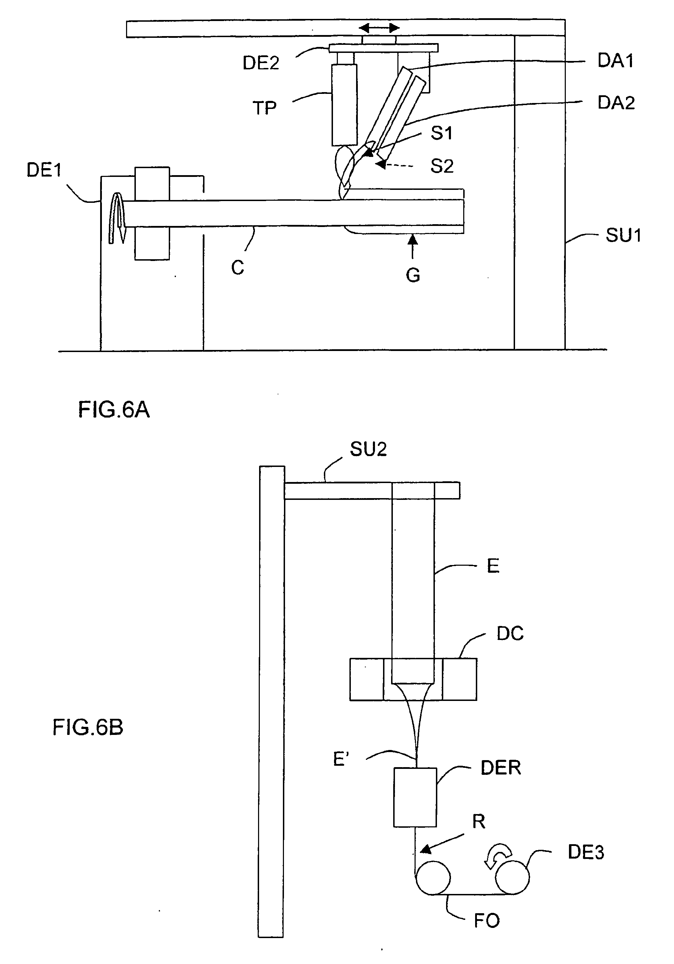

The inner part P1 is formed around core C, for example by injecting grains of pure silica (of refractive index of around 1.456) heated to a very high temperature by a plasma torch TP (see Figure 6A).

The outer part P2 is formed around inner part P1, for example by injecting grains of colored silica also heated to very high temperature by means of the plasma torch TP.

The pigment employed for coloring the silica, designed to constitute the outer part P2, and consequently the future optical filter FE, is chosen so as not to diffuse towards the core C, via the inner part P1 of the optical cladding G. Further, the thickness of the colored silica layer constituting the outer part P2 is chosen sufficiently small so as not to affect the mechanical properties of the final optical fiber F0.

In this example the outer part P2 of the optical cladding G constitutes, once the assembly E has been drawn, an optical filter FE responsible for reflecting (or emitting), in a direction substantially perpendicular to the fiber axis, the photons of which the wavelengths fall at least in the selected spectral band and/or responsible for absorbing at least partially, photons of which the wavelengths do not fall in the selected spectral band.

Further, in this example, wherein the optical filter precursor is constituted by colored pigments, the modification of optical properties during the drawing stage will be reflected by a variation (reduction) in perceived coloration intensity, brought about by the pigment being distributed over a significant length of fiber.

It should be noted that one can employ materials other than colored pigments, in particular when it is desired to optically code the optical fiber F0. In effect, if the color of an optical fiber does allow a technician to locate it over its whole length, situations can be envisaged in which the optical fiber F0 should be able to be located (or detected) by an optical sensing instrument not necessarily operating in the visible spectrum, but for example in the ultraviolet or infrared spectrum. In this case, the optical coding of the optical fiber F0 consists in making its optical cladding G reflecting for photons of which the wavelengths fall in a spectral band comprised in the ultraviolet or infrared. It can also be envisaged that the optical cladding G ensures several filtering operations in several different spectral bands, for example for rendering the optical fiber F0 able to be located both by the eye and by an optical sensing instrument operating in the ultraviolet or infrared.

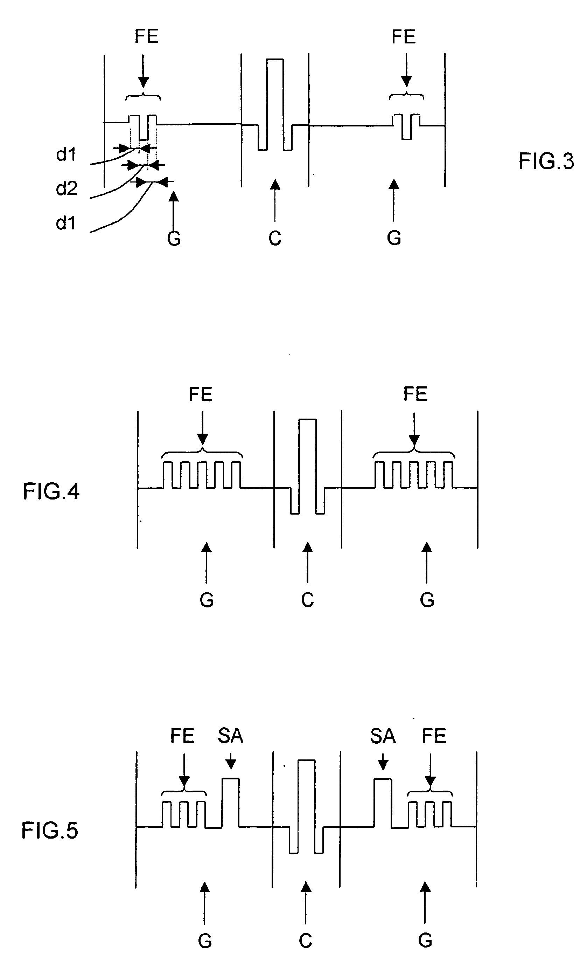

The present inventors shall now refer to figures 2 and 3 to describe a second example of an embodiment of an optical filter FE.

In this second example, the precursor of the future optical filter FE is constituted within the optical cladding G by means of at least one layer C1i of the first material, having a first selected refractive index n1, and a layer C2i of a second material, having a second selected refractive index n2, different from the first one n1, and surrounding layer C1i.

In the example illustrated in Figure 2, the filter FE includes two layers C11 and C12 of the first material, separated by a layer C21 of the second material.

Figure 3 illustrates diagrammatically the refractive index profile of the core C and the optical cladding G of the optical fiber F0 of Figure 2. In this example, the core C has a particular refractive index profile, but this is not obligatory.

The more alternations of layers C1i of the first material and C2i of the second material there are, the more effective the filter will be in reflection of photons of which the wavelengths fall in the selected spectral band. Consequently, it is preferable, as is the case in the example of Figure 5 which we shall discuss later, to constitute filters FE having at least three alternations of layers C1i (i=1-3) and layers C2i. More preferably still, filters FE are constituted having between 5 (i =1-5) and 10 (i=1-10) alternations of layers C1i and layers C2i. This is in particular the case with the example in Figure 4 in which optical filter FE comprises five alternations. Obviously, there can be an even greater number of alternations; the number can for example be 40.

The final thicknesses d1 and d2 (once the assembly E has been drawn) and the refractive indices n1 and n2 of the layers C1i and C2i of the first and second materials are chosen as a function of the spectral band in which optical filter FE should be reflecting. Preferably, the chosen relation between the thicknesses d1 and d2, the first n1 and second n2 refractive indices and the central wavelength $\lambda$ of the spectral band is given by the following relation:

$$\lambda = 2(n1.d1 + n2.d2).$$

When the values of n1, n2, d1 and d2 and consequently the reflecting spectral band are known, the values d1' and d2' which should present the layers of first and second material prior to the drawing stage can be determined. These values d1' and d2' depend in effect on the drawing factor of the core-cladding assembly E. The reduction factor of thicknesses d1' and d2' brought about by the drawing stage is in effect substantially equal to the drawing factor (by 1:1 symmetry).

Further, the brightness of the light reflected and its selectivity being higher as the difference between the first n1 and second n2 refractive indices increases, it is preferable to choose a ratio n1/n2 comprised between about 1.02 and about 1.5 and more preferably between 1.05 and 1.3.

As shown in figures 2-4, it is preferable for filter FE to be placed in an intermediate part of the optical cladding G. To achieve this, one can for example interpose, firstly, an "upstream" thick layer CA of a material having a refractive index comprised between n1 and n2, between the core C and the first layer C11 of the first material of optical filter FE and, secondly, a "downstream" thick layer CV of a material with a refractive index comprised between n1 and n2 (possibly identical to that of upstream layer CA), following the last layer C1n of the first material of optical filter FE.

In order to further enhance the wavelength filtering mechanism provided by the optical cladding G, one can, as illustrated in Figure 5, provide in said optical cladding G, before it is not drawn and to supplement optical filter FE, a precursor having an absorbent structure SA.

Like in the case of the optical filter FE, once the assembly E has been drawn, at least certain of the optical properties of the second precursor become transformed so as to allow absorption of photons of which the wavelengths fall in at least one selected spectral band, different from the filtering spectral band, and preferably complementary thereto. Thus, by absorbing photons which are not reflected by the optical filter FE (and of which the wavelengths do not fall in the filtering spectral band), the coloring effect of the optical fiber F0 is enhanced.

The absorbing structure SA is preferably interposed between the core CE and the optical filter FE during the optical cladding G formation stage. It can, for example, be constituted of one or several layers of silica including an organic, inorganic or mineral pigment. This absorbing structure SA can be made in the same way as the other layers (C1i, C2i, CV and CA) of the optical cladding G, in other words by high-temperature heating using a plasma torch TP.

EXAMPLES

Four examples of optical fibers F0, of the type discussed above with reference to figures 2-5, will now be described.

Example 1 (Chromatic filter)

A first example is designed to provide an optical fiber of 125 $\mu$m diameter (excluding protective coating R), of blue color, in other words reflecting photons having wavelengths comprised between about 450 nm and 500 nm.

To achieve this, one can start from a core C having an initial diameter of 60 mm around which an optical cladding G comprising an upstream layer CA of substantially pure silica of 30 mm (having a refractive index n2 of 1.456) is deposited followed, like in the example of Figure 4, by an optical filter FE precursor constituted by an alternation of five layers C1i (i =1-5) of 70 $\mu$m silica doped, for example, with 48% of $ZrO_2$ (having a refractive index n1 of 1.89) and of five layers C2i (i =1-5) of substantially pure 70 $\mu$m silica (n2 equal to 1.456), and finally, a "downstream" layer CV of substantially pure silica (n2=1.456) so that the core-cladding assembly E has a diameter of 125 mm.

Next, the assembly E is drawn so that it has, once drawn, a diameter of 125 $\mu$m, corresponding to a drawing factor of 1000.

Finally, the drawn assembly E' is covered by a transparent protective covering R so as to complete the manufacture of optical fiber F0.

This arrangement makes it possible to obtain a reflection coefficient of the order of 85% for photons of which the wavelengths fall in the spectral band comprised between 450 nm and 500 nm. Consequently, the optical fiber F0 appears blue in color.

Example 2 (Chromatic filter)

A second example is designed to provide an optical fiber of 125 $\mu$m diameter (excluding protective covering R), of red color, in other words reflecting photons of wavelengths comprised between about 620 nm and 700 nm.

To achieve this, one can start from a core C having an initial diameter of 60 mm around which an optical cladding G having an "upstream" layer CA of substantially pure 28 mm silica (of refractive index n2 equal to 1.456) is deposited, followed by an optical filter FE precursor constituted by an alternation of 10 layers C1i (i=1- 10) of 105 $\mu$m silica doped, for example, with 42% $TiO_2$ (having a refractive index n1 of 1.67) and of 10 layers C2i (i=1-10) of substantially pure 105 $\mu$m silica (n2=1.456), and, finally, a downstream layer CV of substantially pure silica (n2=1.456) so that the core-cladding assembly E has a diameter of 125 mm.

Next, the assembly E is drawn so as to have, once drawn, a diameter of 125 $\mu$m, corresponding to a drawing factor of 1000.

Finally, the drawn assembly E' is covered with a transparent protective covering R so as to complete the manufacture of the optical fiber F0.

This arrangement makes it possible to obtain a reflection coefficient of the order of 80% for photons of which the wavelengths fall in the spectral band comprised between 650 nm and 700 nm. Consequently, the optical fiber F0 appears red in colour.

Example 3 (Chromatic filter + coloring)

A third example is designed to provide an optical fiber of 125 $\mu$m diameter (excluding protective covering R), of intense red color, in other words reflecting photons of wavelengths comprised between about 620 nm and 700 nm.

To achieve this, a precursor of an absorption structure SA constituted by one or several layers of an organic, inorganic or mineral chromatic material designed to absorb all photons of wavelength less than 600 nm and to reflect all photons of wavelengths greater than 600 nm is associated with the optical cladding G of the second example, preferably between the core C and the optical filter FE precursor.

One can employ pigments the proparts of which are comprised between about 0.01% by weight and 3% by weight. For example, inorganic pigments such as oxides (in particular red iron oxide $Fe_2O_3$) can be used, or sulfides (in particular of cadmium red CdS or CdSe). One can also use organic pigments such as Styryl 17 or DOTC Iodite.

Example 4 (Chromatic filter + coloring)

A fourth example is designed, like the third example, to provide an optical fiber of 125 $\mu$m diameter (excluding protective covering R) of intense red color. One consequently also adds to the optical cladding G of the second example, preferably between the core C and the optical filter FE precursor, an absorption structure SA precursor. But, in this example an absorption structure SA precursor is used having one or several layers of an achromatic material having substantially uniform absorption in the visible spectrum.

This chromatic material can for example be carbon black (C), or black iron oxide ($Fe_3O_4$), or white zinc (ZnO), or, again, an inorganic material such as a pigment or anneline black, or yet again, an organic material.

To implement the method of the invention described above, an installation of the type illustrated in Figure 6A and 6B can be used.

This installation resembles those used industrially for building up thickness primary preforms for optical fibers with silica by an external plasma deposition method. In this method, grains of silica are injected into a plasma torch, they melt and are projected onto the primary preform for building up thickness. The installation according to the invention actually distinguishes itself from known installations for building up thickness by the fact that it has two different grain feed devices instead of one single one, so as to allow building-up of the optical fiber precursor FE and, optionally, of the absorbing structure SA precursor.

More precisely, and as illustrated in Figure 6A, the installation according to the invention comprises firstly a first drive device DE1 responsible for rotating the core C of a fibered element, and first and second feed devices DA1 and DA2 responsible for selectively supplying at a first and second outlet S1 and S2, respectively, in alternating fashion, first and second materials designed to constitute at least the optical cladding G and its optical filter FE precursor. For example, the first and second materials are respectively doped silica (or colored silica) and substantially pure silica, in grain form.

The installation further comprises a first heating device TP, such as for example a plasma torch responsible for providing a high temperature flame in a region located in the neighborhood of first and second outlets S1 and S2, and a second drive device DE2, mounted on a carrier SU1 and responsible for driving the first and second feed devices DA1 and DA2 in linear motion along with heating device TP, in the neighborhood of the core C, in order to provide for the core-cladding assembly E to be built up.

Once the core C has been installed on the first drive device DE1, the latter is operated so as to rotate the core C. Next, the second feed device DA2 is controlled so as to supply at the second outlet S2, a jet of pure silica in grains so as to pass through the flame of plasma torch TP. During this time, first feed device DA1 is not operating. Further, during the whole time of operation of the second feed device DA2, the first drive device DE1 moves in linear motion so that an "upstream" layer CA having a refractive index n2 and a chosen thickness, is uniformly deposited over the whole useful length of the core C.

The optical filter FE precursor build-up phase now starts.

To achieve this, a first feed device DA1 is set to deliver at the first outlet S1 a jet of (for example) doped silica grains so that they pass through the flame of plasma torch TP. During this time, the second feed device DA2 is not operating. Further, during the whole time of operation of the first feed device DA1, the first drive device DE1 drives it in linear motion so that a first layer C11 having a refractive index n1 and a chosen thickness, is uniformly deposited over the whole useful length of the core C.

Next, the same is carried out with the second feed device DA2 while preventing first feed device DA1 from operating, so that a first layer C21 having a refractive index n2 and a chosen thickness is uniformly deposited over the whole useful length of the core C.

The two depositions of layers C1i and C2i are repeated as many times as there will be alternations provided, for constituting the optical filter FE precursor. Then, preferentially, an "upstream" layer CV is deposited to complete the formation of optical cladding G and reach the desired diameter for the assembly E prior to drawing.

The drawing stage now follows. For this, and as shown diagrammatically in Figure 6B, the installation can comprise a carrier SU2 responsible for holding the core-cladding assembly E, a second heating device DC responsible for heating the end of the core-cladding assembly E, not yet drawn, and a third drive device D3 responsible for drawing, in a controlled fashion, the heated end of the assembly E, and winding the drawn element E'. This thereby reduces the transversal dimension of the assembly E down to a chosen value, for example 125 μm, so as to bring about a change in at least certain of the optical properties of the optical cladding G. One thus forms, on line, a drawn assembly E'.

One can optionally surround the drawn assembly E' with a single or multi-layer covering R designed to improve its resistance to mechanical and chemical aggressions. For this, and as shown diagrammatically on Figure 6B, the installation can comprise an enveloping device DER, preferably in-line (for example located just ahead of winding device D-3). The covering R that is deposited is for example a substantially transparent resin.

Because of the invention, a permanent coloring and/or optical coding is obtained by providing a chromatic filter, by adding a coloring, e.g. in the form of a pigment, or by both providing a chromatic filter and adding a coloring. Further, it is no longer necessary to provide a multitude of colored resins, which is expensive in terms of production and storage cost, and one is no longer limited to a few colors imposed by said colored resins, since one can from now on filter practically any wavelength whatsoever.

The invention is not limited to the embodiments of an installation for producing a fibered element and the fibered element production method discussed above, just by way of example, also covers all variations thereof that the skilled person might envisage within the scope of the following claims.

Thus, above is discussed, by way of an illustrative example, the production of a circular cross-section optical fiber. However, the invention is not limited either to this type of cross-section, nor to this type of fibered element. It indeed concerns all fibered elements regardless of the shape of their cross-section, whenever they include a first part of vitreous material surrounded by a second part having a selective optical filtering function once drawing is terminated. One can thus envisage starting from a first part (optionally a fiber core or primary preform) of rectangular cross-section. In this case, drawing will remain uni-axial, but only the thickness of the core-cladding assembly will decrease propartally to elongation (the width remaining substantially constant).

Further, above is discussed, by way of illustrative example, the production of a fibered element in silica. The invention however is not limited to this type of vitreous material. It indeed covers (in particular) all types of glass provided these can be subject to softening and one can modify their refractive index by suitable means. Consequently, the heating device designed to form the optical cladding prior to drawing can be different from a plasma torch. Obviously, the various materials used should be compatible between themselves and should be able to be drawn with important drawing factors without any danger of breaking.

Further, above is described, by way of illustrative example, the production of a fibered element adapted to the optical communications field. However, the invention is not limited to this field of application. It concerns indeed other fields of application such as for example the textile field and more particularly weaving (the production of woven fiber structures either just using the fibered elements of the invention or these along with other types of filaments or fibers), or decoration, and in particular the production of matrices in which the fibered elements of the invention can be embedded, optionally after having been cut into small pieces.

Finally, above is discussed, by way of illustrative example, the production of a fibered element in which the selective optical filter was formed in a part of the second part (or optical cladding in the case of an optical fiber). However, the selective optical filter can also constitute the second part, in particular in the case of a glass fiber. In this case, the first part of vitreous material is surrounded by the selective optical filter and optionally by an additional transparent covering.

## Claims

1. A method for producing a fibered element (F0), **characterised in that** it consists in i) forming an assembly (E) by surrounding a first part (C) of vitreous material, with a second part (G) having first optical properties, ii) then drawing said assembly (E) in a longitudinal direction so as to increase its longitudinal dimension while reducing at least one of its transverse dimensions, said increase and reduction being chosen so as to transform at least certain of the said first optical properties of the second part (G) into second optical properties allowing it to selectively filter, in a direction substantially perpendicular to the longitudinal direction of the drawn assembly, photons of which the wavelength falls in at least one selected spectral band.

2. The method according to claim 1, **characterised in that** said formation of the assembly (E) consists in surrounding said first part (C) with a second part (G) having an inner part (P1) prolonged by an outer part (P2) designed, once drawn, to filter said photons of which the wavelengths fall in at least the selected spectral band.

3. The method according to claim 2, **characterised in that** said outer part (P2) is made from a colored material, said filtering consisting in reflecting or emitting the photons of which the wavelengths fall in said selected spectral band and/or in absorbing photons of which the wavelengths fall in said selected spectral band.

4. The method according to any one of claims 2 and 3, **characterised in that** said first part (C) is made of silica and said colored material constituting said outer part (P2) is colored silica.

5. The method according to any one of claims 1-4, **characterised in that** said formation of the assembly (E) consists in surrounding said first part (C) with a second part (G) comprising an optical filter (FE) precursor designed, once said assembly (E) has been drawn, to define an optical filter responsible for reflecting said photons of which the wavelengths fall in said selected spectral band.

6. The method according to claim 5, **characterised in that** said optical filter (FE) precursor is constituted by at least one layer (C1i) of a first material having a selected first refractive index (n1), surrounded by a layer (C2i) of a second material having a second selected refractive index (n2), different from the first refractive index (n1).

7. The method according to claim 6, **characterised in that** said layers (C1i, C2i) of first and second materials have, once drawn, respective thicknesses (d1, d2) that are related to each other, to the first (n1) and second (n2) refractive indices and to the central wavelength $\lambda$ of the said selected spectral band, by the relation $\lambda = 2(n1.d1 + n2.d2)$.

8. The method according to any one of claims 6 and 7, **characterised in that** the ratio between said first (n1) and second (n2) refractive indices is comprised between 1.02 and 1.5.

9. The method according to one of claims 6-8, **characterised in that** said optical filter (FE) precursor is constituted by a selected number of alternations of layers (C1i) of the first material and layers (C2i) of the second material.

10. The method according to claim 9, **characterised in that** said number is at least equal to 1 and at the most equal to 40.

11. The method according to any one of claims 6-10, **characterised in that** between said first part (C) and said optical filter (FE) precursor, there is interposed a thick layer (CA) of a material having a refractive index comprised between said first (n1) and second (n2) refractive indices, and that a thick layer (CV) of a material having a refractive index comprised between said first (n1) and second (n2) refractive indices is added after said optical filter (FE) precursor.

12. The method according to any one of claims 6 to 11, **characterised in that** within said second part (G) there is formed, prior to drawing, an absorbing structure (SA) designed to absorb, after drawing, photons of which the wavelengths are comprised in at least one other selected spectral band.

13. The method according to claim 12, **characterised in that** said absorbing structure (SA) is located between said first part (C) and said optical filter (FE) precursor, and constitutes at least one layer of a material in silica comprising a pigment selected from the group, comprising organic, inorganic or mineral pigments.

14. The method according to any one of claims 6-13, **characterised in that** said first part (C) is made from a silica-based material having a selected refractive index profile, said first material is of substantially pure or doped silica having a refractive index greater than the refractive index of silica, and said second material is doped silica or substantially pure silica having a refractive index below the refractive index of silica.

**15.** The method according to any one of claims 1-14, **characterised in that** after said drawing, said drawn assembly (E') is surrounded by a substantially transparent covering (R).

**16.** An optical fiber (F0) **characterised in that** it is constituted by a fibered element produced by the method according to any one of the preceding claims.

**17.** A fibered structure, **characterised in that** it is constituted by a multiplicity of fibered elements (F0) obtained by means of the method according to any one of claims 1-15, and embedded in a polymer matrix.

**18.** A fibered structure, **characterised in that** it is constituted by a multiplicity of fibered elements (F0) produced by means of the method according to any one of claims 1-15, and woven.

**19.** An installation for producing fibered elements, **characterised in that** it comprises first drive means (DE1) suitable to rotate a first part of a optical fiber (F0), made of vitreous material, first (DA1) and second (DA2) feed means suitable to supply at first (S1) and second (S2) outlets, selectively, respectively, and in an alternating fashion, first and second materials designed to constitute, around said first part (C) at least a second part (G) and its optical filter (FE) precursor, first heating means (TP) suitable to bring to a selected temperature a region located in the neighborhood of said first (S1) and second (S2) outlets, and second drive means (DE2) suitable to drive in linear motion said first (DA1) and second (DA2) feed means and said first heating means (TP), in the neighborhood of said core (C), so as to constitute an assembly (E) comprising said first (C) part surrounded by second part (G) in conformity with the method according to any one of claims 1-15.

**20.** The installation according to claim 19, **characterised in that** it comprises second heating means (DC) suitable to heat a part of said assembly (E), and third drive means (DE3) suitable to draw a heated end part of said assembly (E), to increase the longitudinal dimension thereof while simultaneously reducing its transversal dimensions, and for winding said drawn assembly (E').

**21.** The installation according to one of claims 19 and 20, **characterised in that** it comprises covering means (DER) suitable to surround said drawn assembly (E') with a substantially transparent covering (R).

**Patentansprüche**

**1.** Verfahren zur Herstellung eines gefaserten Elements (F0), **dadurch gekennzeichnet, dass** es aus

   i) einem Ausbilden einer Anordnung (E) durch Umgeben eines ersten Teils (C) eines glasartigen Materials mit einem zweiten Teil (G) mit ersten optischen Eigenschaften und
   ii) dann einem Ziehen der Anordnung (E) in einer Längsrichtung, um ihre Längsabmessung zu erhöhen während mindestens eine ihrer Querabmessungen verringert wird,

besteht, wobei das Erhöhen und Verringern derart gewählt wird, um zumindest bestimmte der ersten optischen Eigenschaften des zweiten Teils (G) in zweite optische Eigenschaften umzuwandeln, welche es ermöglichen, Photonen, deren Wellenlänge in zumindest ein ausgewähltes Spektralband fällt, in einer Richtung im Wesentlichen senkrecht zu der Längsrichtung der gezogenen Anordnung selektiv zu filtern.

**2.** Verfahren nach Anspruch 1, **dadurch gekennzeichnet, dass** das Ausbilden der Anordnung (E) aus einem Umgeben des ersten Teils (C) mit einem zweiten Teil (G) besteht, welches ein Innenteil (P1) aufweist, welches durch ein Außenteil (P2) verlängert ist, welches ausgestaltet ist, sobald es gezogen ist, die Photonen, deren Wellenlängen in zumindest das ausgewählte Spektralband fallen, zu filtern.

**3.** Verfahren nach Anspruch 2, **dadurch gekennzeichnet, dass** das Außenteil (P2) aus einem gefärbten Material gefertigt ist, wobei das Filtern aus einem Reflektieren oder Aussenden der Photonen, deren Wellenlängen in das ausgewählte Spektralband fallen, und/oder aus einem Absorbieren von Photonen, deren Wellenlängen in das ausgewählte Spektralband fallen, besteht.

**4.** Verfahren nach einem der Ansprüche 2 und 3, **dadurch gekennzeichnet, dass** das erste Teil (C) aus Siliziumdioxid gefertigt ist und das gefärbte Material, welches das Außenteil (P2) bildet, gefärbtes Siliziumdioxid ist.

**5.** Verfahren nach einem der Ansprüche 1-4, **dadurch gekennzeichnet, dass** das Ausbilden der Anordnung (E) aus einem Umgeben des ersten Teils (C) mit einem zweiten Teil (G), welches eine optische Filtervorstufe (FE) umfasst, welche ausgestaltet ist, sobald die Anordnung (E) gezogen wurde, ein optisches Filter zu definieren, welches für ein Reflektieren der Photonen, deren Wellenlängen in das gewählte Spektralband fallen, zuständig ist, besteht.

**6.** Verfahren nach Anspruch 5, **dadurch gekennzeichnet, dass** die optische Filtervorstufe (FE) aus mindestens einer Schicht (C1i) eines ersten Materials mit einem ersten ausgewählten Brechungsindex (n1) gebildet ist, welche von einer Schicht (C2i) eines zweiten Materials mit einem zweiten ausgewählten Brechungsindex (n2), welcher unterschiedlich zu dem ersten Brechungsindex (n1) ist, umgeben ist.

7. Verfahren nach Anspruch 6, **dadurch gekennzeichnet, dass** die Schichten (C1i, C2i) aus erstem und zweitem Material, sobald sie gezogen sind, jeweilige Dikken (d1, d2) aufweisen, welche zueinander, zu dem ersten (n1) und zweiten (n2) Brechungsindex und zu der Mittenwellenlänge λ des gewählten Spektralbandes über die Beziehung λ=2 (n1·d1+n2·d2) in Beziehung stehen.

8. Verfahren nach einem der Ansprüche 6 und 7, **dadurch gekennzeichnet, dass** das Verhältnis zwischen dem ersten (n1) und zweiten (n2) Brechungsindex zwischen 1,02 und 1,5 liegt.

9. Verfahren nach einem der Ansprüche 6-8, **dadurch gekennzeichnet, dass** die optische Filtervorstufe (FE) durch eine ausgewählte Anzahl von Wechseln von Schichten (C1i) aus dem ersten Material und Schichten (C2i) aus dem zweiten Material gebildet wird.

10. Verfahren nach Anspruch 9, **dadurch gekennzeichnet, dass** die Anzahl mindestens gleich 1 und höchstens gleich 40 ist.

11. Verfahren nach einem der Ansprüche 6-10, **dadurch gekennzeichnet, dass** zwischen dem ersten Teil (C) und der optischen Filtervorstufe (FE) eine dicke Schicht (CA) aus einem Material mit einem Brechungsindex, welcher zwischen dem ersten (n1) und zweiten (n2) Brechungsindex liegt, angeordnet ist, und dass eine dikke Schicht (CV) aus einem Material mit einem Brechungsindex, welcher zwischen dem ersten (n1) und zweiten (n2) Brechungsindex liegt, nach der optischen Filtervorstufe (FE) hinzugefügt wird.

12. Verfahren nach einem der Ansprüche 6-11, **dadurch gekennzeichnet, dass** innerhalb des zweiten Teils (G) vor dem Ziehen eine absorbierende Struktur (SA) ausgebildet wird, welche ausgestaltet ist, nach einem Ziehen, Photonen, deren Wellenlängen in mindestens einem weiteren ausgewählten Spektralband enthalten sind, zu absorbieren.

13. Verfahren nach Anspruch 12, **dadurch gekennzeichnet, dass** die absorbierende Struktur (SA) zwischen dem ersten Teil (C) und der optischen Filtervorstufe (FE) angeordnet ist und mindestens eine Schicht eines Materials aus Siliziumdioxid, welches ein Pigment umfasst, welches aus der Gruppe ausgewählt ist, die organische, anorganische oder mineralische Pigmente umfasst, bildet.

14. Verfahren nach einem der Ansprüche 6-13, **dadurch gekennzeichnet, dass** das erste Teil (C) aus einem Siliziumdioxid basierten Material gefertigt ist, welches ein ausgewähltes Brechungsindexprofil aufweist, wobei das erste Material aus im Wesentlichen reinem oder dotiertem Siliziumdioxid besteht, welches einen größeren Brechungsindex als der Brechungsindex von Siliziumdioxid aufweist, und wobei das zweite Material dotiertes Siliziumdioxid oder im Wesentlichen reines Siliziumdioxid ist, welches einen Brechungsindex unterhalb des Brechungsindex von Siliziumdioxid aufweist.

15. Verfahren nach einem der Ansprüche 1-14, **dadurch gekennzeichnet, dass** die gezogene Anordnung (E') nach dem Ziehen mit einer im Wesentlichen transparenten Abdeckung (R) umgeben wird.

16. Optische Faser (F0), **dadurch gekennzeichnet, dass** sie aus einem gefaserten Element gebildet ist, welches durch das Verfahren nach einem der vorhergehenden Ansprüche hergestellt wurde.

17. Gefaserte Struktur, **dadurch gekennzeichnet, dass** sie aus einer Vielzahl von gefaserten Elementen (F0) gebildet ist, welche mittels des Verfahrens nach einem der Ansprüche 1-15 hergestellt wurden und in eine Polymermatrix eingebettet sind.

18. Gefaserte Struktur, **dadurch gekennzeichnet, dass** sie aus einer Vielzahl von gefaserten Elementen (F0) gebildet ist, welche mittels des Verfahrens nach einem der Ansprüche 1-15 hergestellt wurden und gewebt sind.

19. Anlage zur Herstellung gefaserter Elemente, **dadurch gekennzeichnet, dass** sie umfasst:

ein erstes Antriebsmittel (DE1), welches geeignet ist, ein erstes Teil einer optischen Faser (F0), das aus einem gläsernen Material gefertigt ist, zu drehen,
ein erstes (DA1) und ein zweites (DA2) Zuführungsmittel, welche geeignet sind, an einem ersten (S1) und einem zweiten (S2) Auslass jeweils selektiv und in einer abwechselnden Art und Weise ein erstes und ein zweites Material bereitzustellen, welche ausgestaltet sind, um das erste Teil (C) mindestens ein zweites Teil (G) und seine optische Filtervorstufe (FE) zu bilden,
ein erstes Heizmittel (TP), welches geeignet ist, einen Bereich, welcher in der Umgebung des ersten (S1) und zweiten (S2) Auslasses angeordnet ist, auf eine ausgewählte Temperatur zu bringen, und

ein zweites Antriebsmittel (DE2), welches geeignet ist, das erste (DA1) und zweite (DA2) Zuführungsmittel und das erste Heizmittel (TP) in einer linearen Bewegung in die Umgebung des Kerns (C) zu führen, um eine Anordnung (E), welche das erste Teil (C) umgeben von dem zweiten Teil (G) umfasst, in Übereinstimmung mit dem Verfahren nach einem der Ansprüche 1-15 zu erzeugen.

20. Anlage nach Anspruch 19, **dadurch gekennzeichnet, dass** sie ein zweites Heizmittel (DC), welches geeignet ist, einen Teil der Anordnung (E) zu heizen, und ein drittes Antriebsmittel (DE3), welches geeignet ist, ein erwärmtes Endteil der ist, einen Teil der Anordnung (E) zu heizen, und ein drittes Antriebsmittel (DE3), welches geeignet ist, ein erwärmtes Endteil der Anordnung (E) zu ziehen, um die Längsabmessung davon zu erhöhen, während gleichzeitig ihre Querabmessungen verringert werden, und die gezogene Anordnung (E') aufzuwickeln, umfasst.

21. Anlage nach einem der Ansprüche 19 und 20, **dadurch gekennzeichnet, dass** sie ein abdeckendes Mittel (DER) umfasst, welches geeignet ist, die gezogene Anordnung (E') mit einer im Wesentlichen transparenten Abdeckung (R) zu umgeben.

## Revendications

1. Procédé de fabrication d'un élément fibreux (F0) **caractérisé en ce qu'**il consiste en les étapes consistant à i) former un ensemble (E) en entourant une première partie (C) constituée d'un matériau vitreux avec une deuxième partie (G) présentant des premières propriétés optiques, ii) étirer ensuite ledit ensemble (E) dans une direction longitudinale de manière à augmenter sa dimension longitudinale tout en réduisant au moins l'une de ses dimensions transversales, lesdites augmentation et réduction étant choisies de manière à transformer au moins certaines desdites premières propriétés optiques de la deuxième partie (G) en deuxièmes propriétés optiques lui permettant de filtrer sélectivement, dans une direction sensiblement perpendiculaire à la direction longitudinale de l'ensemble étiré, des photons dont les longueurs d'onde se trouvent dans au moins une bande spectrale sélectionnée.

2. Procédé selon la revendication 1, **caractérisé en ce que** ladite formation de l'ensemble (E) consiste en l'entourage de ladite première partie (C) par une deuxième partie (G) ayant une partie intérieure (P1) prolongée par une partie extérieure (P2) conçue, une fois étirée, pour filtrer lesdits photons dont les longueurs d'onde se trouvent dans au moins la bande spectrale sélectionnée.

3. Procédé selon la revendication 2, **caractérisé en ce que** ladite partie extérieure (P2) est faite d'un matériau coloré, ledit filtrage consistant en la réflexion ou l'émission des photons, dont les longueurs d'onde se trouvent dans ladite bande spectrale sélectionnée et/ou en l'absorption de photons dont les longueurs d'onde se trouvent dans ladite bande spectrale sélectionnée.

4. Procédé selon l'une quelconque des revendications 2 et 3, **caractérisé en ce que** ladite première partie (C) est faite de silice et ledit matériau coloré constituant ladite partie extérieure (P2) est de la silice colorée.

5. Procédé selon l'une quelconque des revendications 1 à 4, **caractérisé en ce que** ladite formation de l'ensemble (E) consiste à entourer ladite première partie (C) par une deuxième partie (G) comprenant un précurseur de filtre optique (FE) conçu, une fois que ledit ensemble (E) a été étiré, pour définir un filtre optique chargé de réfléchir lesdits photons dont les longueurs d'onde se trouvent dans ladite bande spectrale sélectionnée.

6. Procédé selon la revendication 5, **caractérisé en ce que** ledit précurseur de filtre optique (FE) est constitué d'au moins une couche (C1i) constituée d'un premier matériau présentant un premier indice de réfraction sélectionné (n1), entourée d'une couche (C2i) constituée d'un deuxième matériau présentant un deuxième indice de réfraction sélectionné (n2) différent du premier indice de réfraction (n1).

7. Procédé selon la revendication 6, **caractérisé en ce que** lesdites couches (C1i, C2i) des premier et deuxième matériaux ont, une fois étirées, des épaisseurs respectives (d1, d2) qui sont liées l'une à l'autre, aux premier (n1) et deuxième (n2) indices de réfraction et à la longueur d'onde centrale $\lambda$ de ladite bande spectrale sélectionnée par la relation $\lambda = 2(n1.d1 + n2.d2)$.

8. Procédé selon l'une quelconque des revendications 6 et 7, **caractérisé en ce que** le rapport entre lesdits premier (n1) et deuxième (n2) indices de réfraction est compris entre 1,02 et 1,5.

9. Procédé selon l'une des revendications 6 à 8, **caractérisé en ce que** ledit précurseur de filtre optique (FE) est constitué par un nombre sélectionné d'alternances de couches (C1i) du premier matériau et de couches (C2i) du deuxième matériau.

10. Procédé selon la revendication 9, **caractérisé en ce que** ledit nombre est au moins égal à 1 et au plus égal à 40.

**11.** Procédé selon l'une quelconque des revendications 6 à 10, **caractérisé en ce que**, entre ladite première partie (C) et ledit précurseur de filtre optique (FE), il est intercalé une couche épaisse (CA) constituée d'un matériau ayant un indice de réfraction compris entre lesdits premier (n1) et deuxième (n2) indices de réfraction, et **en ce qu'**une couche épaisse (CV) constituée d'un matériau ayant un indice de réfraction compris entre lesdits premier (n1) et deuxième (n2) indices de réfraction est ajoutée après ledit précurseur de filtre optique (FE).

**12.** Procédé selon l'une quelconque des revendications 6 à 11, **caractérisé en ce que**, dans ladite deuxième partie (G), il est formé, avant l'étirage, une structure absorbante (SA) conçue pour absorber, après l'étirage, les photons dont les longueurs d'onde sont comprises dans au moins une autre bande spectrale sélectionnée.

**13.** Procédé selon la revendication 12, **caractérisé en ce que** ladite structure absorbante (SA) est localisée entre ladite première partie (C) et ledit précurseur de filtre optique (FE), et constitue au moins une couche d'un matériau dans de la silice comprenant un pigment sélectionné à partir du groupe comprenant des pigments organiques, inorganiques ou minéraux.

**14.** Procédé selon l'une quelconque des revendications 6 à 13, **caractérisé en ce que** ladite première partie (C) est faite d'un matériau à base de silice présentant un profil d'indice de réfraction sélectionné, ledit premier matériau est constitué de silice pratiquement pure ou dopée ayant un indice de réfraction supérieur à l'indice de réfraction de la silice, et ledit deuxième matériau est constitué de silice dopée ou de silice pratiquement pure ayant un indice de réfraction inférieur à l'indice de réfraction de la silice. indice de réfraction inférieur à l'indice de réfraction de la silice.

**15.** Procédé selon l'une quelconque des revendications 1 à 14, **caractérisé en ce que**, après ledit étirage, ledit ensemble étiré (E') est entouré par une protection pratiquement transparente (R).

**16.** Fibre optique (FO) **caractérisée en ce qu'**elle est constituée par un élément fibreux produit par le biais du procédé selon l'une quelconque des revendications précédentes.

**17.** Structure fibreuse **caractérisée en ce qu'**elle est constituée par une multiplicité d'éléments fibreux (FO) obtenus au moyen du procédé selon l'une quelconque des revendications 1 à 15 et incorporés dans une matrice de polymère.

**18.** Structure fibreuse, **caractérisée en ce qu'**elle est constituée par une multiplicité d'éléments fibreux (FO) produits au moyen du procédé selon l'une quelconque des revendications 1 à 15, et tissés.

**19.** Installation de production d'éléments fibreux, **caractérisée en ce qu'**elle comprend un premier moyen d'entraînement (DE1) approprié pour entraîner en rotation une première partie d'une fibre optique (F0), faite d'un matériau vitreux, des premier (DA1) et deuxième (DA2) moyens d'avance appropriés pour fournir au niveau des premier (S1) et deuxième (S2) orifices de sortie, sélectivement, respectivement, et d'une manière alternée, des premier et deuxième matériaux conçus pour constituer autour de ladite première partie (C) au moins une deuxième partie (G) et son précurseur de filtre optique (FE), un premier moyen de chauffage (TP) approprié pour amener à une température sélectionnée une région localisée dans le voisinage desdits premier (S1) et deuxième (S2) orifices de sortie, et un deuxième moyen d'entraînement (DE2) approprié pour entraîner dans un mouvement linéaire lesdits premier (DA1) et deuxième (DA2) moyens d'avance et ledit premier moyen de chauffage (TP), dans le voisinage dudit coeur (C) de manière à conformité avec le procédé selon l'une quelconque des revendications 1 à 15.

**20.** Installation selon la revendication 19, **caractérisée en ce qu'**elle comprend un deuxième moyen de chauffage (DC) approprié pour chauffer une partie dudit ensemble (E), et un troisième moyen d'entraînement (DE3) approprié pour étirer une partie d'extrémité chauffée dudit ensemble (E), pour augmenter ses dimensions longitudinales tout en réduisant simultanément ses dimensions transversales, et pour enrouler ledit ensemble étiré (E').

**21.** Installation selon l'une des revendications 19 et 20, **caractérisée en ce qu'**elle comprend un moyen de protection (DER) approprié pour entourer ledit ensemble étiré (E') avec une protection pratiquement transparente (R).

FIG.1

FIG.2

FIG.3

FIG.4

FIG.5

FIG.6A

FIG.6B